# EUROPEAN PATENT SPECIFICATION

(11) **EP 3 851 799 B1**
(45) Date of publication and mention of the grant of the patent: **03.05.2023**
(21) Application number: 21164332.5
(22) Date of filing: 23.03.2021
(51) Int. Cl.: G01C 21/32, G01C 21/36, G01C 21/00

(54) **DETERMINE TRAFFIC CHECKPOINT METHOD AND APPARATUS, ELECTRONIC DEVICE, AND MEDIUM**
VERFAHREN UND EINRICHTUNG ZUR VERKEHRSPRÜFPUNKTBESTIMMUNG, ELEKTRONISCHE VORRICHTUNG UND MEDIUM
PROCÉDÉ ET APPAREIL DE POINT DE CONTRÔLE DE TRAFIC DE DÉTERMINATION, DISPOSITIF ÉLECTRONIQUE ET SUPPORT

(30) Priority: 28.08.2020 CN 202010887671
(43) Date of publication of application: 21.07.2021
(73) Proprietor: BEIJING BAIDU NETCOM SCIENCE TECHNOLOGY CO., LTD., Beijing 100085 (CN)
(72) Inventor: LIN, Jinzhu, Beijing 100085 (CN)
(74) Representative: Laqua, Bernd Christian Kurt

(56) References cited:
- EP-A1- 2 887 326
- DE-A1- 10 155 501
- US-A1- 2012 265 430
- US-B1- 6 169 956
- US-B1- 6 574 553

## Description

### TECHNICAL FIELD

The present disclosure relates to the field of computer technologies, and in particular to a method and apparatus for determining a traffic checkpoint, an electronic device, and a medium.

### BACKGROUND

With the continuous development of the social economy and the transportation industry, a growing number of vehicles travel across regions and even borders. During global route planning, a cross-border request needs to be made to a customs port between two countries. However, opening time of the customs port may change over time, and untimely or false update will cause problems such as improper route planning, detours, or failure to get through the port that severely affect user experience.

Data of the customs port is often updated manually at regular intervals, for example, once a year. However, manually updating data may cause untimely or false update of the data of the customs port, and then cause poorly planned routes, detours, infeasible planning schemes, or other problems.

Patent document US 2012/265430 A1 discloses a method for detecting a boundary crossing of an object, the movement of which is represented by a sequence of positions on a digital road map with vectorized road segments and at least one boundary.

### SUMMARY

According to an aspect of the present disclosure, a computer-implemented method for determining a traffic checkpoint is provided, the method comprising: acquiring data of vehicle trajectories within a predetermined area, the predetermined area being determined by a boundary between a first area and a second area adjacent to the first area, wherein the boundary is an administrative area boundary between the first area and the second area; matching the data of the vehicle trajectories with map data within the predetermined area to obtain a matching road network; determining a plurality of intersection points between the road network and the boundary, and dividing the plurality of intersection points into at least one group, a distance between any two intersection points in a first group of the at least one group being less than a preset value; and determining a specific position of a first traffic checkpoint in the first group based on a number of the vehicle trajectories passing each of the intersection points in the first group of the at least one group.

According to another aspect of the present disclosure, an apparatus for determining a traffic checkpoint is provided, the apparatus comprising: an acquisition module configured to acquire data of vehicle trajectories within a predetermined area, the predetermined area being determined by a boundary between a first area and a second area adjacent to the first area, wherein the boundary is an administrative area boundary between the first area and the second area; a matching module configured to match the data of the vehicle trajectories with map data within the predetermined area to obtain a matching road network; a determination module configured to determine a plurality of intersection points between the road network and the boundary, and divide the plurality of intersection points into at least one group, a distance between any two intersection points in a first group of the at least one group being less than a preset value; and a planning module configured to determine a specific position of a traffic checkpoint in the first group based on the number of vehicle trajectories passing each of the intersection point in the first group of the at least one group.

According to another aspect of the present disclosure, a computer program product is provided, comprising program code portions for performing the method described in the present disclosure when the computer program product is executed on one or more computing devices.

According to another aspect of the present disclosure, a computer-readable storage medium is provided which has computer program instructions stored thereon, wherein the computer program instructions, when executed by a processor, cause the processor to perform the method described in the present disclosure.

According to the method and the apparatus for determining a traffic checkpoint, the electronic device, and the medium provided in the present disclosure, data of the customs port can be automatically updated and user navigation experience can be enhanced.

### BRIEF DESCRIPTION OF THE DRAWINGS

The drawings exemplarily show embodiments and form a part of the specification, and are used to explain exemplary implementations of the embodiments together with a written description of the specification. The embodiments shown are merely for illustrative purposes and do not limit the scope of the claims. Throughout the drawings, like reference signs denote like but not necessarily identical elements.
FIG. 1 is a flowchart showing a method for determining a traffic checkpoint according to an embodiment of the present disclosure;
FIG. 2 is a schematic diagram showing a relationship among vehicle trajectories, road networks, and administrative areas according to an embodiment of the present disclosure;
FIG. 3 is a schematic diagram showing a relationship between a boundary and a predetermined area according to an embodiment of the present disclosure;
FIG. 4 is a flowchart showing a method for matching data of vehicle trajectories with map data according to an embodiment of the present disclosure;
FIG. 5 is a schematic structural diagram showing an apparatus for determining a traffic checkpoint according to an embodiment of the present disclosure; and
FIG. 6 is a structural block diagram showing an example electronic device that can be applied to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure can be implemented in various forms and should not be construed as being limited to the embodiments set forth herein. On the contrary, these embodiments are provided for a more thorough and complete understanding of the present disclosure. It should be understood that the accompanying drawings and the embodiments of the present disclosure are merely for illustrative purposes, and are not intended to limit the scope of protection of the present disclosure.

It should be understood that the steps recorded in the method implementations of the present disclosure may be performed in different orders and/or in parallel. Furthermore, additional steps may be comprised and/or the execution of the illustrated steps may be omitted in the method implementations. The scope of the present disclosure is not limited in this respect.

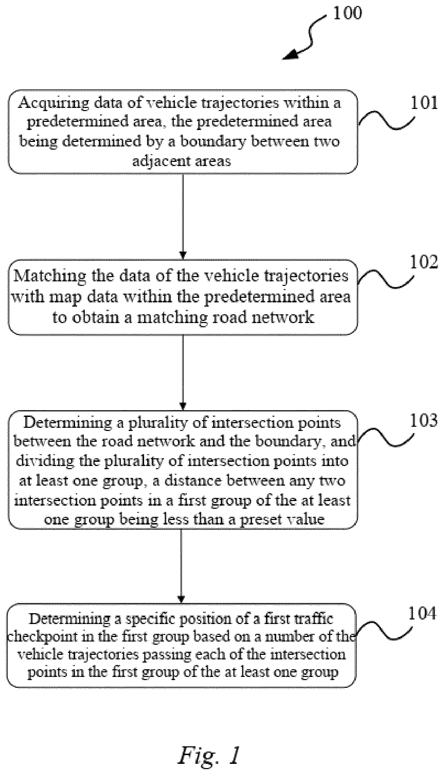

FIG. 1 is a flowchart showing a method 100 for determining a traffic checkpoint according to an embodiment of the present disclosure.

In step 101, acquiring data of vehicle trajectories within a predetermined area, the predetermined area being determined by a boundary between two adjacent areas.

In step 102, matching the data of the vehicle trajectories with map data within the predetermined area to obtain a matching road network.

In step 103, determining a plurality of intersection points between the road network and the boundary, and dividing the plurality of intersection points into at least one group, a distance between any two intersection points in a first group of the at least one group being less than a preset value.

In step 104, determining a specific position of a first traffic checkpoint in the first group based on a number of the vehicle trajectories passing each of the intersection points in the first group of the at least one group.

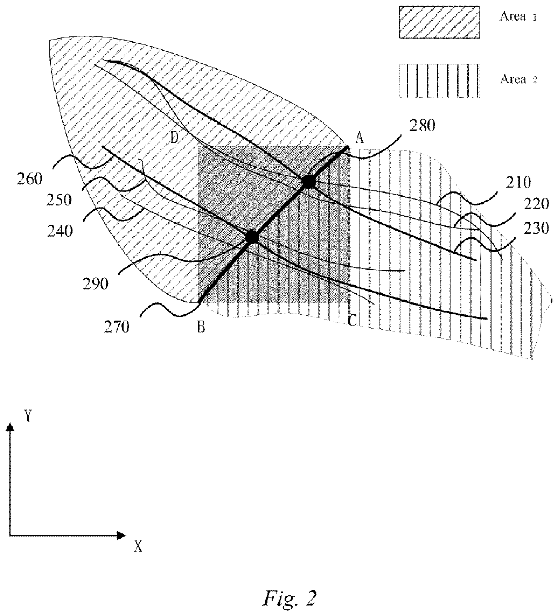

The method 100 for determining a traffic checkpoint according to the embodiment shown in FIG. 1 makes it possible that a specific position of an opening traffic checkpoint can be determined by using the collected data of the vehicle trajectories that is more up-to-date, thereby avoiding untimely or false update of customs port (that is, traffic checkpoint) data that may be caused by manually updating data in the related technologies. Specifically, by matching the data of vehicle trajectories with the real map data, the method 100 according to this embodiment makes it possible to obtain corresponding possible positions of a current traffic checkpoint without a need to manually update data, and select the most possible position therefrom as a position of the current traffic checkpoint. Accurate and timely update of the data of the traffic checkpoint can improve the accuracy of a navigation route, thereby enhancing user navigation experience. FIG. 2 is a schematic diagram showing a relationship among vehicle trajectories, road networks, and administrative areas according to an embodiment of the present disclosure.

As shown in FIG. 2, two adjacent areas: an area 1 and an area 2 are different areas, the area 1 and the area 2 have a boundary 270, and the boundary 270 has an endpoint A and an endpoint B.

Four vehicle trajectories are shown therein, comprising: a vehicle trajectory 210, a vehicle trajectory 220, a vehicle trajectory 240, and a vehicle trajectory 250.

A road network 230 and a road network 260 are preset road networks on a map. There is an intersection point 280 between the road network 230 and the boundary 270, and there is an intersection point 290 between the road network 260 and the boundary 270.

In some aspects, the predetermined area is determined by performing operations comprising: acquiring coordinates of a plurality of points on the boundary in a first direction and coordinates of the plurality of points in a second direction, the plurality of points being obtained from the boundary with predetermined precision; comparing the coordinates of the plurality of points in the first direction to obtain Xₘₐₓ and Xₘᵢₙ, wherein Xₘₐₓ is a maximum value among the coordinates of the plurality of points in the first direction, and Xₘᵢₙ is a minimum value among the coordinates of the plurality of points in the first direction; comparing the coordinates of the plurality of points in the second direction to obtain Yₘₐₓ and Yₘᵢₙ, wherein Yₘₐₓ is a maximum value among the coordinates of the plurality of points in the second direction, and Yₘᵢₙ is a minimum value among the coordinates of the plurality of points in the second direction, and determining coordinates of four vertices of the predetermined area as (Xₘᵢₙ, Yₘₐₓ), (Xₘₐₓ, Yₘₐₓ), (Xₘₐₓ, Yₘᵢₙ), and (Xₘᵢₙ, Yₘᵢₙ).

Still referring to FIG. 2, acquiring X coordinates and Y coordinates of the plurality of points on the boundary 270. The plurality of points is obtained with predetermined precision, for example, the X coordinates and Y coordinates of the plurality of points on the boundary 270 are acquired with precision of 1 meter. The X coordinates of the plurality of points on the boundary 270 are compared to find that an X coordinate of a point B is the smallest and an X coordinate of a point A is the largest, and therefore, Xₘₐₓ = X_{A}, and Xₘᵢₙ = X_{B}. The Y coordinates of the plurality of points on the boundary 270 are compared to find that a Y coordinate of the point B is the smallest and a Y coordinate of the point A is the largest, and therefore, Yₘₐₓ = Y_{A}, and Yₘᵢₙ = Y_{B}. Therefore, the coordinates of four vertices of the predetermined area are (X_{B}, Y_{A}), (X_{A}, Y_{A}), (X_{A}, Y_{B}), and (X_{B}, Y_{B}). Correspondingly, the four vertices are D, A, C, and B. Therefore, the predetermined area is determined by an area defined by the four vertices D, A, C, and B.

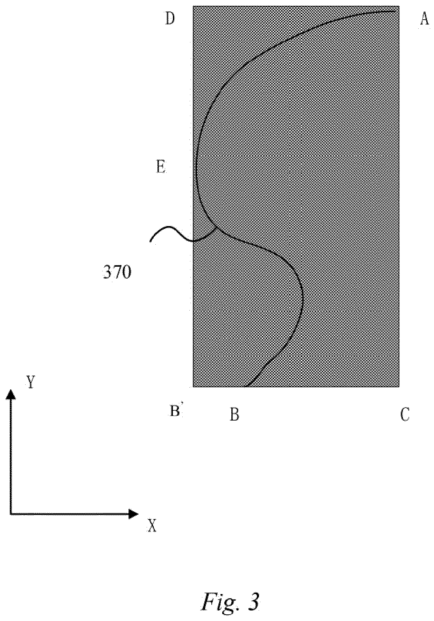

FIG. 3 is a schematic diagram showing a relationship between a boundary and a predetermined area according to an embodiment of the present disclosure.

According to some implementations of the present disclosure, the relationship between the shape of a boundary and a predetermined area is complex. As shown in FIG. 3, acquiring X coordinates and Y coordinates of a plurality of points on a boundary 370. The plurality of points is obtained with predetermined precision, for example, the X coordinates and Y coordinates of the plurality of points on the boundary 370 are acquired with precision of 1 meter. The X coordinates of the plurality of points on the boundary 370 are compared to find that an X coordinate of a point E is the smallest and an X coordinate of a point A is the largest, and therefore, Xₘₐₓ = X_{A}, and Xₘᵢₙ = X_{E}. The Y coordinates of the plurality of points on the boundary 370 are compared to find that a Y coordinate of a point B is the smallest and a Y coordinate of the point A is the largest, and therefore, Yₘₐₓ = Y_{A}, and Yₘᵢₙ = Y_{B}. Therefore, the coordinates of four vertices of the predetermined area are (X_{E}, Y_{A}), (X_{A}, Y_{A}), (X_{A}, Y_{B}), and (X_{E}, Y_{B}). Correspondingly, the four vertices are D, A, C, and B . Therefore, the predetermined area is determined by an area defined by the four vertices D, A, C, and B .

In step 101, acquiring data of vehicle trajectories within a predetermined area, the predetermined area being determined by a boundary between two adjacent areas. It can be learned in conjunction with Figs 2 and 3 that, the predetermined area is determined by the boundary 270 or the boundary 370 between the two adjacent areas.

Because the predetermined area is determined by the boundary, acquiring the data of the vehicle trajectories within the predetermined area can ensure that the data of the obtained vehicle trajectories are located near the boundary, the obtained data is more effective and accurate, and data of irrelevant vehicle trajectories around is filtered out, thereby reducing the computation amount and improving the computation efficiency.

The data of the vehicle trajectories falling within the predetermined area is collected through collision check.

The boundary is an administrative area boundary between the adjacent areas. The administrative area boundary between the adjacent areas may be a boundary between adjacent provinces or cities. The two adjacent areas may belong to the same country or region. For example, the boundary is a part of the boundary between Shandong Province and Shanxi Province, or a part of a boundary between adjacent cities or counties within the same province. Alternatively, the two adjacent areas may belong to different countries or regions. For example, the boundary is a part of the boundary between Shenzhen and Hong Kong.

In some aspects , the traffic checkpoint may be a customs port.

Step 102 is continued. Step 102 of matching the data of the vehicle trajectories with map data within the predetermined area to obtain a matching road network comprises: determining whether a matching degree between the data of the vehicle trajectories and existing road network data in the map data within the predetermined area exceeds a preset matching degree threshold; and determining, in response to determining that the matching degree exceeds the threshold, a current route in the existing road network as a route in the matching road network route.

The road network is a preset road network on a map.

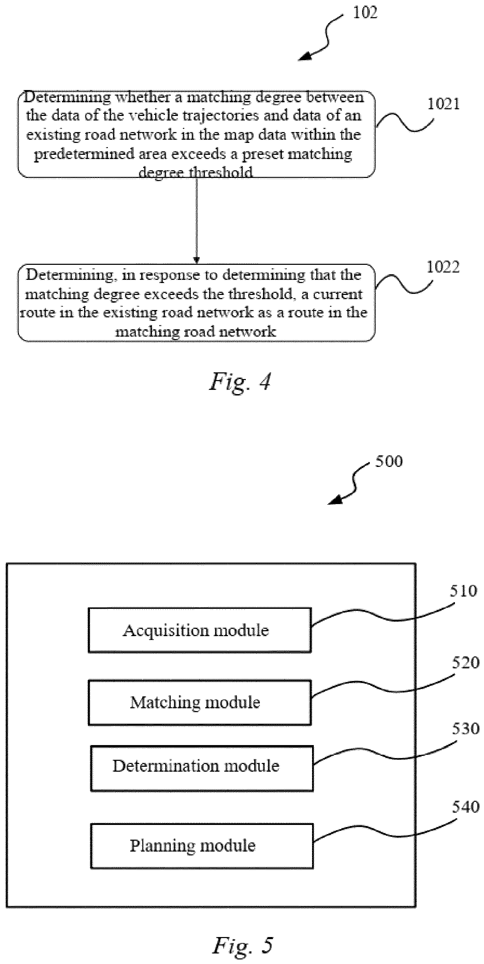

FIG. 4 is a flowchart showing a method for matching data of vehicle trajectories with map data according to an embodiment of the present disclosure.

As shown in FIG. 4, determining whether a matching degree between the data of the vehicle trajectories and data of an existing road network in the map data within the predetermined area exceeds a preset matching degree threshold; and determining, in response to determining that the matching degree exceeds the threshold, a current route in the existing road network as a route in the matching road network . If the matching degree does not exceed the threshold, determining that the current route in the existing road network does not match the vehicle trajectories to be determined.

Since the data of the vehicle trajectories may have errors, the vehicle trajectories may not necessarily coincide with the road network, and the data of the vehicle trajectories needs to be matched with the map data to obtain the matching road network, to determine a road network which a vehicle travels on. The data of the road network has been preset in the map data and has high accuracy, thereby providing an accurate data basis for subsequent computation of the traffic checkpoint.

Each of the vehicle trajectories corresponds to a respective route in the matching road network. As there is definitely a corresponding road for a traveling vehicle, any vehicle trajectory corresponds to a route in a road network.

It may be learned in conjunction with FIG. 2, both the vehicle trajectory 210 and the vehicle trajectory 220 match the road network 230 by using the matching method 102 shown in FIG. 4, and similarly, both the vehicle trajectory 240 and the vehicle trajectory 250 match the road network 260 by using the matching method shown in FIG. 4.

In some aspects , the matching method may be the Huffman algorithm.

Step 103 is continued, in which the plurality of intersection points between the matching road network and the boundary are searched, wherein the matching road network comprises a plurality of routes intersecting the boundary to form the plurality of intersection points.

There is a plurality of intersection points between the road network and the boundary. The plurality of intersection points is grouped based on distances between the intersection points, and a plurality of intersection points between which distances are less than a preset value is grouped into one group. The distance between any two intersection points in the group being less than the preset value.

Still referring to FIG. 2, the matching road network comprises the road network 230 and the road network 260. There is an intersection point 280 between the road network 230 and the boundary 270, and there is an intersection point 290 between the road network 260 and the boundary 270.

The intersection point between a route and a boundary represents a position of a traffic checkpoint of two adjacent administrative areas through which a vehicle passes, and if there is a plurality of intersection points, it indicates that there is a plurality of traffic checkpoints on the boundary between the adjacent administrative areas through which the vehicle is allowed to pass. Finding the plurality of traffic checkpoints can provide diversified routes for navigation.

According to some embodiments of the present disclosure, the determining a plurality of intersection points between the road network and the boundary, and dividing the plurality of intersection points into at least one group, a distance between any two intersection points in a first group of the at least one group being less than a preset value comprises: determining the at least one group by means of a depth-first algorithm or a breadth-first algorithm.

In some aspects , all the intersection points are traversed once by means of the depth-first algorithm or the breadth-first algorithm, to group intersection points between which distances are less than a threshold into one group, for example, into the first group, a distance between any two intersection points in the first group being less than the preset value.

Still referring to FIG. 2, the intersection point 280 and the intersection point 290 are traversed by means of the depth-first algorithm or the breadth-first algorithm, and if a distance between the intersection point 280 and the intersection point 290 is less than the threshold, the intersection point 280 and the intersection point 290 are grouped into the first group.

The two intersection points in the figure are merely exemplary descriptions, and the present disclosure imposes no limitation on the number of intersection points.

Step 104 is continued, in which a specific position of a first traffic checkpoint in the first group is determined based on a number of the vehicle trajectories passing intersection points in the first group of the at least one group.

The intersection points in the first group are aggregated to determine a traffic checkpoint through which most vehicles pass, and a specific position of the traffic checkpoint is recommended as a navigation route.

According to some implementations of the present disclosure, a number of the vehicle trajectories passing each of the intersection points in the first group within a predetermined time is counted, wherein when the number of vehicle trajectories is greater than a number threshold, traffic checkpoints corresponding to the intersection points in the first group are candidate traffic checkpoints of the first traffic checkpoint.

Still referring to FIG. 2, the numbers of vehicle trajectories passing the intersection point 280 and the intersection point 290 within the predetermined time are counted. For example, the numbers of vehicle trajectories passing the intersection point 280 and the intersection point 290 within one day are counted and are 20 and 30, respectively. When the number threshold is 10, the traffic checkpoints corresponding to the intersection point 280 and the intersection point 290 respectively are both candidate traffic checkpoints.

According to some implementations of the present disclosure, a position of a candidate traffic checkpoint through which most vehicle trajectories pass is selected as the specific position of the first traffic checkpoint.

Still referring to FIG. 2, in some aspects, selecting a position of the candidate traffic checkpoint that corresponds to the intersection point 290 and through which most vehicle trajectories pass as the specific position of the first traffic checkpoint.

In some aspects, the step of determining the candidate traffic checkpoints may alternatively be omitted. After the number of vehicle trajectories passing each of the intersection points in the first group within the predetermined time is counted, a position of a traffic checkpoint through which most vehicle trajectories pass is directly selected as the specific position of the first traffic checkpoint.

Since there is no need to manually update data of the traffic checkpoint in the process of determining the position of the first traffic checkpoint, a specific position of an opening traffic checkpoint can be acquired by processing the data of the vehicle trajectories, and the position of the traffic checkpoint through which most vehicle trajectories pass is selected as the specific position of the first traffic checkpoint, which indicates that most vehicles have passed through the first traffic checkpoint on the boundary. In this case, it is most possible that the traffic checkpoint is opening, and therefore, directing a navigation route to the first traffic checkpoint will ensure to the greatest extent that a vehicle passes the first traffic checkpoint. When the first traffic checkpoint is a customs port, according to the method for determining a traffic checkpoint provided in the present disclosure, data of the customs port can be automatically updated and user navigation experience can be enhanced.

FIG. 5 is a schematic structural diagram showing an apparatus 500 for determining a traffic checkpoint according to an embodiment of the present disclosure.

As shown in FIG. 5, the apparatus 500 for determining a traffic checkpoint is provided, the apparatus comprising:
an acquisition module 510 configured to acquire data of vehicle trajectories within a predetermined area, the predetermined area being determined by a boundary between two adjacent areas;
a matching module 520 configured to match the data of the vehicle trajectories with map data within the predetermined area to obtain a matching road network;
a determination module 530 configured to determine a plurality of intersection points between the road network and the boundary, and divide the plurality of intersection points into at least one group, a distance between any two intersection points in a first group of the at least one group being less than a preset value; and
a planning module 540 configured to determine a specific position of a first traffic checkpoint in the first group based on a number of the vehicle trajectories passing each of the intersection points in the first group of the at least one group.

Based on the above apparatus for determining a traffic checkpoint, there is no need to manually update data of the traffic checkpoint, data of trajectories within a specific area is acquired, and a specific position of an opening traffic checkpoint can be acquired by processing the data of the vehicle trajectories. There is no need to manually update data during obtaining of the position of the traffic checkpoint, so that the data of the traffic checkpoint can be automatically updated, and the data of the traffic checkpoint can be quickly updated to ensure the accuracy of a navigation route, thereby enhancing user navigation experience.

According to an embodiment of the present disclosure, the present disclosure further provides an electronic device 600 and a readable storage medium.

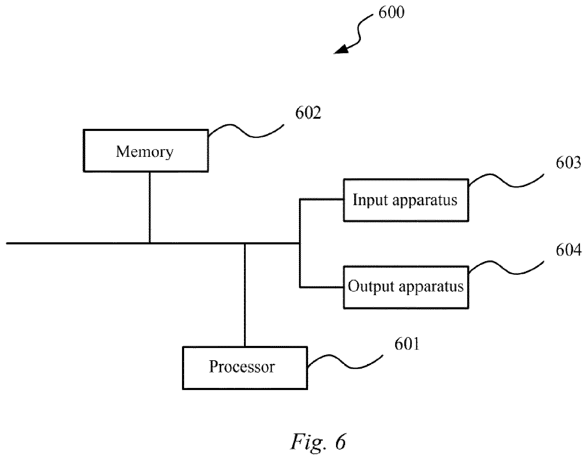

FIG. 6 is a structural block diagram showing an exemplary electronic device that can be applied to an embodiment of the present disclosure.

The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 6, the electronic device 600 comprises: one or more processors 601, a memory 602, and an interface for connecting various components, comprising a high-speed interface and a low-speed interface. The various components are connected to each other by using different buses, and may be mounted on a common motherboard or in other manners as required. The processor may process instructions executed in the electronic device (for example, instructions to display graphical information of the GUI on the display device coupled to the interface). In other implementations, if required, the plurality of processors and/or a plurality of buses can be used together with a plurality of memories. Similarly, a plurality of electronic devices can be connected, and each device provides some of the necessary operations (for example, as a server array, a group of blade servers, or a multi-processor system). In FIG. 6, one processor 601 is used as an example.

The memory 602 is a non-transitory computer-readable storage medium provided in the present disclosure. The memory stores instructions that can be executed by at least one processor, so that the at least one processor performs the method for determining a traffic checkpoint provided in the present disclosure. The non-transitory computer-readable storage medium of the present disclosure stores computer instructions for causing a computer to perform the method for determining a traffic checkpoint provided in the present disclosure.

As a non-transitory computer-readable storage medium, the memory 602 may be configured to store non-transitory software programs, and non-transitory computer-executable programs and modules, such as program instructions/modules corresponding to the method for determining a traffic checkpoint in the embodiments of the present disclosure (for example, the acquisition module 510, the matching module 520, the determination module 530, and the planning module 540 shown in FIG. 5). The processor 601 executes various functional applications and data processing of the server, that is, implements the method for determining a traffic checkpoint in the foregoing method embodiments, by running non-transitory software programs, instructions, and modules stored in the memory 602.

The memory 602 may comprise a program storage area and a data storage area, wherein the program storage area may store an operating system and an application program required by at least one function; and the storage data area can store data created according to the use of the electronic device configured to implement the method for determining a traffic checkpoint. Moreover, the memory 602 may comprise a high-speed random access memory, and may further comprise a non-transitory memory, such as at least one magnetic disk storage device, a flash memory device, or other non-transitory solid-state storage devices. In some embodiments, the memory 602 may optionally comprise memories disposed remotely relative to the processor 601, and these remote memories may be connected, through a network, to the electronic device for implementing the method for determining a traffic checkpoint. Instances of the above network include, but are not limited to, the Internet, an enterprise intranet, a local area network, a mobile communications network, and a combination thereof.

The electronic device 600 for implementing the method for determining a traffic checkpoint may further comprise: an input apparatus 603 and an output apparatus 604. The processor 601, the memory 602, the input apparatus 603, and the output apparatus 604 may be connected through a bus or in other manners. In FIG. 6, the connection using a bus is taken as an example.

The input apparatus 603 can receive entered digit or character information, and generate a key signal input related to user settings and function control of the electronic device for implementing the method for determining a traffic checkpoint, and may be input apparatuses such as a touchscreen, a keypad, a mouse, a trackpad, a touchpad, an indicator rod, one or more mouse buttons, a trackball, and a joystick. The output apparatus 604 may comprise a display device, an auxiliary lighting apparatus (such as an LED), a tactile feedback apparatus (such as a vibration motor), etc. The display device may include, but is not limited to, a liquid crystal display (LCD), a light-emitting diode (LED) display, and a plasma display. In some implementations, the display device may be a touchscreen.

Various implementations of the systems and technologies described herein can be implemented in a digital electronic circuit system, an integrated circuit system, an ASIC (application-specific integrated circuit), computer hardware, firmware, software, and/or a combination thereof. These various implementations may comprise: the systems and technologies are implemented in one or more computer programs, wherein the one or more computer programs may be executed and/or interpreted on a programmable system comprising at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

These computing programs (also referred to as programs, software, software applications, or code) comprise machine instructions of a programmable processor, and can be implemented by using an advanced procedure and/or object-oriented programming languages, and/or assembly/machine languages. As used herein, the terms "machine-readable medium" and "computer-readable medium" refer to any computer program product, device, and/or apparatus (for example, a magnetic disk, an optical disc, a memory, a programmable logic device (PLD)) configured to provide machine instructions and/or data to a programmable processor, comprising a machine-readable medium that receives machine instructions as machine-readable signals. The term "machine-readable signal" refers to any signal used to provide machine instructions and/or data to a programmable processor.

In order to provide interaction with a user, the systems and technologies described herein can be implemented on a computer which has: a display apparatus (for example, a CRT (cathode-ray tube) or an LCD (liquid crystal display) monitor) configured to display information to the user; and a keyboard and pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, voice input, or tactile input).

The systems and technologies described herein can be implemented in a computing system (for example, as a data server) comprising a backend component, or a computing system (for example, an application server) comprising a middleware component, or a computing system (for example, a user computer with a graphical user interface or a web browser through which the user can interact with the implementation of the systems and technologies described herein) comprising a frontend component, or a computing system comprising any combination of the backend component, the middleware component, or the frontend component. The components of the system can be connected to each other through digital data communication (for example, a communications network) in any form or medium. Examples of the communications network comprise: a local area network (LAN), a wide area network (WAN), and the Internet.

A computer system may comprise a client and a server. The client and the server are generally far away from each other and usually interact through a communications network. A relationship between the client and the server is generated by computer programs running on respective computers and having a client-server relationship with each other. The server may be a server in a distributed system, or a server combined with a blockchain. The server may alternatively be a cloud server, or an intelligent cloud computing server or intelligent cloud host with artificial intelligence technologies.

## Claims

1. A computer-implemented method for determining a traffic checkpoint, the method comprising:
acquiring (101) data of vehicle trajectories within a predetermined area, the predetermined area being determined by a boundary between a first area and a second area adjacent to the first area, wherein the boundary is an administrative area boundary between the first area and the second area;
matching (102) the data of the vehicle trajectories with map data within the predetermined area to obtain a matching road network;
determining (103) a plurality of intersection points between the road network and the boundary, and dividing the plurality of intersection points into at least one group, a distance between any two intersection points in a first group of the at least one group being less than a preset value; and
determining (104) a specific position of a first traffic checkpoint in the first group based on a number of the vehicle trajectories passing each of the intersection points in the first group of the at least one group.

2. The method according to claim 1, wherein the predetermined area is determined by performing operations comprising:
acquiring coordinates of a plurality of points on the boundary in a first direction and coordinates of the plurality of points in a second direction, the plurality of points being obtained from the boundary with predetermined precision;
comparing the coordinates of the plurality of points in the first direction to obtain Xₘₐₓ and Xₘᵢₙ, wherein Xₘₐₓ is a maximum value among the coordinates of the plurality of points in the first direction, and Xₘᵢₙ is a minimum value among the coordinates of the plurality of points in the first direction;
comparing the coordinates of the plurality of points in the second direction to obtain Yₘₐₓ and Yₘᵢₙ, wherein Yₘₐₓ is a maximum value among the coordinates of the plurality of points in the second direction and Yₘᵢₙ is a minimum value among the coordinates of the plurality of points in the second direction; and
determining coordinates of four vertices of the predetermined area as (Xₘᵢₙ, Yₘₐₓ), (Xₘₐₓ, Yₘₐₓ), (Xₘₐₓ, Yₘᵢₙ), and (Xₘᵢₙ, Yₘᵢₙ).

3. The method according to claim 2, wherein the matching the data of the vehicle trajectories with map data within the predetermined area to obtain a matching road network comprises:
determining whether a matching degree between the data of the vehicle trajectories and data of an existing road network in the map data within the predetermined area exceeds a preset matching degree threshold; and
determining, in response to determining that the matching degree exceeds the threshold, a current route in the existing road network as a route in the matching road network.

4. The method according to claim 3, wherein each of the vehicle trajectories corresponds to a respective route in the matching road network.

5. The method according to any one of the foregoing claims, wherein the determining a plurality of intersection points between the road network and the boundary comprises:
searching for the plurality of intersection points between the matching road network and the boundary, wherein the matching road network comprises a plurality of routes intersecting the boundary to form the plurality of intersection points.

6. The method according to any one of the foregoing claims, wherein the plurality of intersection points is divided into the at least one group by means of a depth-first algorithm or a breadth-first algorithm.

7. The method according to any one of the foregoing claims, wherein the determining a specific position of a traffic checkpoint in the first group based on a number of the vehicle trajectories passing each of the intersection points in the first group of the at least one group comprises:
counting the number of the vehicle trajectories passing each of the intersection points in the first group within a predetermined time;
in accordance with a determination that the number of the vehicle trajectories passing each of the intersection points in the first group is greater than a number threshold, determining traffic checkpoints corresponding to the intersection points in the first group are candidate traffic checkpoints of the first traffic checkpoint; and
selecting a position of one of the candidate traffic checkpoints through which most vehicle trajectories pass as the specific position of the first traffic checkpoint.

8. The method according to any one of the foregoing claims, wherein the first traffic checkpoint is a customs port, and the two adjacent areas belong to different countries or regions.

9. An apparatus for determining a traffic checkpoint, the apparatus comprising:
an acquisition module (510) configured to acquire data of vehicle trajectories within a predetermined area, the predetermined area being determined by a boundary between a first area and a second area adjacent to the first area, wherein the boundary is an administrative area boundary between the first area and the second area;
a matching module (520) configured to match the data of the vehicle trajectories with map data within the predetermined area to obtain a matching road network;
a determination module (530) configured to determine a plurality of intersection points between the road network and the boundary, and divide the plurality of intersection points into at least one group, a distance between any two intersection points in a first group of the at least one group being less than a preset value; and
a planning module (540) configured to determine a specific position of a first traffic checkpoint in the first group based on a number of the vehicle trajectories passing each of the intersection points in the first group of the at least one group.

10. The apparatus according to claim 9, wherein the predetermined area is determined by the determination module, and the determination module is configured to:
acquire coordinates of a plurality of points on the boundary in a first direction and coordinates of the plurality of points in a second direction, the plurality of points being obtained from the boundary with predetermined precision;
compare the coordinates of the plurality of points in the first direction to obtain Xₘₐₓ and Xₘᵢₙ, wherein Xₘₐₓ is a maximum value among the coordinates of the plurality of points in the first direction and Xₘᵢₙ is a minimum value among the coordinates of the plurality of points in the first direction;
compare the coordinates of the plurality of points in the second direction to acquire Yₘₐₓ and Yₘᵢₙ, wherein Yₘₐₓ is a maximum value among the coordinates of the plurality of points in the second direction and Yₘᵢₙ is a minimum value among the coordinates of the plurality of points in the second direction; and
determine coordinates of four vertices of the predetermined area as (Xₘᵢₙ, Yₘₐₓ), (Xₘₐₓ, Yₘₐₓ), (Xₘₐₓ, Yₘᵢₙ), and (Xₘᵢₙ, Yₘᵢₙ).

11. The apparatus according to claim 9 or 10, wherein the vehicle trajectories and the matching road network have a one-to-one correspondence.

12. The apparatus according to any one of the claims 9 to 11, wherein
the planning module is configured to:
count a number of the vehicle trajectories passing each of the intersection points in the first group within a predetermined time;
in accordance with a determination that the number of the vehicle trajectories is greater than a number threshold, determine traffic checkpoints corresponding to the intersection points in the first group are candidate traffic checkpoints of the first traffic checkpoint; and
select a position of one of the candidate traffic checkpoints through which most vehicle trajectories pass as the specific position of the first traffic checkpoint.

13. The apparatus according to any one of claims 9 to 12, wherein the first traffic checkpoint is a customs port, and the two adjacent areas belong to different countries or regions.

14. A computer program product comprising program code portions for performing the method of any one of claims 1 to 8 when the computer program product is executed on one or more computing devices.

15. A computer-readable storage medium having computer program instructions stored thereon, wherein the computer program instructions, when executed by a processor, cause the processor to perform the method according to any one of claims 1 to 8.

## Patentansprüche

1. Computerimplementiertes Verfahren zum Bestimmen eines Verkehrsprüfpunkts, wobei das Verfahren umfasst:
Erfassen (101) von Daten von Fahrzeugtrajektorien innerhalb eines vorbestimmten Bereichs, wobei der vorbestimmte Bereich durch eine Grenze zwischen einem ersten Bereich und einem zu dem ersten Bereich benachbarten zweiten Bereich bestimmt wird, wobei die Grenze eine administrative Bereichsgrenze zwischen dem ersten Bereich und dem zweiten Bereich ist;
Abgleichen (102) der Daten der Fahrzeugtrajektorien mit Kartendaten innerhalb des vorbestimmten Bereichs, um ein übereinstimmendes Straßennetz zu erhalten;
Bestimmen (103) einer Mehrzahl von Schnittpunkten zwischen dem Straßennetz und der Grenze und Teilen der Mehrzahl von Schnittpunkten in mindestens eine Gruppe, wobei ein Abstand zwischen zwei beliebigen Schnittpunkten in einer ersten Gruppe der mindestens einen Gruppe kleiner als ein voreingestellter Wert ist; und
Bestimmen (104) einer spezifischen Position eines ersten Verkehrsprüfpunkts in der ersten Gruppe basierend auf einer Anzahl der Fahrzeugtrajektorien, die jeden der Schnittpunkte in der ersten Gruppe der mindestens einen Gruppe passieren.

2. Verfahren nach Anspruch 1, wobei der vorbestimmte Bereich durch Durchführen von Operationen bestimmt wird, die Folgendes umfassen:
Erfassen von Koordinaten einer Mehrzahl von Punkten auf der Grenze in einer ersten Richtung und Koordinaten der Mehrzahl von Punkten in einer zweiten Richtung, wobei die Mehrzahl von Punkten von der Grenze mit vorbestimmter Genauigkeit erhalten wird;
Vergleichen der Koordinaten der Mehrzahl von Punkten in der ersten Richtung, um Xₘₐₓ und Xₘᵢₙ zu erhalten, wobei Xₘₐₓ ein Maximalwert unter den Koordinaten der Mehrzahl von Punkten in der ersten Richtung ist und Xₘᵢₙ ein Minimalwert unter den Koordinaten der Mehrzahl von Punkten in der ersten Richtung ist;
Vergleichen der Koordinaten der Mehrzahl von Punkten in der zweiten Richtung, um Yₘₐₓ und Yₘᵢₙ zu erhalten, wobei Yₘₐₓ ein Maximalwert unter den Koordinaten der Mehrzahl von Punkten in der zweiten Richtung ist und Yₘᵢₙ ein Minimalwert unter den Koordinaten der Mehrzahl von Punkten in der zweiten Richtung ist; und
Bestimmen von Koordinaten von vier Eckpunkten des vorbestimmten Bereichs als (Xₘᵢₙ, Yₘₐₓ), (Xₘₐₓ, Yₘₐₓ), (Xₘₐₓ, Yₘᵢₙ) und (Xₘᵢₙ, Yₘᵢₙ).

3. Verfahren nach Anspruch 2, wobei das Abgleichen der Daten der Fahrzeugtrajektorien mit Kartendaten innerhalb des vorbestimmten Bereichs, um ein übereinstimmendes Straßennetz zu erhalten, umfasst:
Bestimmen, ob ein Übereinstimmungsgrad zwischen den Daten der Fahrzeugtrajektorien und Daten eines bestehenden Straßennetzes in den Kartendaten innerhalb des vorbestimmten Bereichs einen voreingestellten Übereinstimmungsgradschwellenwert überschreitet; und
Bestimmen, als Reaktion auf das Bestimmen, dass der Übereinstimmungsgrad den Schwellenwert überschreitet, einer aktuellen Route in dem bestehenden Straßennetz als eine Route in dem übereinstimmenden Straßennetz.

4. Verfahren nach Anspruch 3, wobei jede der Fahrzeugtrajektorien einer jeweiligen Route in dem übereinstimmenden Straßennetz entspricht.

5. Verfahren nach einem der vorhergehenden Ansprüche, wobei das Bestimmen einer Mehrzahl von Schnittpunkten zwischen dem Straßennetz und der Grenze umfasst:
Suchen nach der Mehrzahl von Schnittpunkten zwischen dem übereinstimmenden Straßennetz und der Grenze, wobei das übereinstimmende Straßennetz eine Mehrzahl von Routen umfasst, die die Grenze schneiden, um die Mehrzahl von Schnittpunkten zu bilden.

6. Verfahren nach einem der vorhergehenden Ansprüche, wobei die Mehrzahl von Schnittpunkten mittels eines Tiefenalgorithmus, depth-first algorithm, oder eines Breitenalgorithmus, breadth-first algorithm, in die mindestens eine Gruppe unterteilt wird.

7. Verfahren nach einem der vorhergehenden Ansprüche, wobei das Bestimmen einer spezifischen Position eines Verkehrsprüfpunkts in der ersten Gruppe basierend auf einer Anzahl der Fahrzeugtrajektorien, die jeden der Schnittpunkte in der ersten Gruppe der mindestens einen Gruppe passieren, umfasst:
Zählen der Anzahl der Fahrzeugtrajektorien, die jeden der Schnittpunkte in der ersten Gruppe innerhalb einer vorbestimmten Zeit passieren;
gemäß einer Bestimmung, dass die Anzahl der Fahrzeugtrajektorien, die jeden der Schnittpunkte in der ersten Gruppe passieren, größer als ein Anzahlschwellenwert ist, Bestimmen, dass Verkehrsprüfpunkte, die den Schnittpunkten in der ersten Gruppe entsprechen, Kandidaten-Verkehrsprüfpunkte des ersten Verkehrsprüfpunkts sind; und
Auswählen einer Position eines der Kandidaten-Verkehrsprüfpunkte, durch die die meisten Fahrzeugtrajektorien als die spezifische Position des ersten Verkehrsprüfpunkts laufen.

8. Verfahren nach einem der vorhergehenden Ansprüche, wobei der erste Verkehrsprüfpunkt ein anpassbarer Port ist und die zwei benachbarten Bereiche zu unterschiedlichen Ländern oder Regionen gehören.

9. Vorrichtung zum Bestimmen eines Verkehrsprüfpunkts, wobei die Vorrichtung umfasst:
ein Erfassungsmodul (510), das konfiguriert ist zum Erfassen von Daten von Fahrzeugtrajektorien innerhalb eines vorbestimmten Bereichs, wobei der vorbestimmte Bereich durch eine Grenze zwischen einem ersten Bereich und einem zu dem ersten Bereich benachbarten zweiten Bereich bestimmt wird, wobei die Grenze eine administrative Bereichsgrenze zwischen dem ersten Bereich und dem zweiten Bereich ist;
ein Abgleichmodul (520), das konfiguriert ist zum Abgleichen der Daten der Fahrzeugtrajektorien mit Kartendaten innerhalb des vorbestimmten Bereichs, um ein übereinstimmendes Straßennetz zu erhalten;
ein Bestimmungsmodul (530), das konfiguriert ist zum Bestimmen einer Mehrzahl von Schnittpunkten zwischen dem Straßennetz und der Grenze und Teilen der Mehrzahl von Schnittpunkten in mindestens eine Gruppe, wobei ein Abstand zwischen zwei beliebigen Schnittpunkten in einer ersten Gruppe der mindestens einen Gruppe kleiner als ein voreingestellter Wert ist; und
ein Planungsmodul (540), das konfiguriert ist zum Bestimmen einer spezifischen Position eines ersten Verkehrsprüfpunkts in der ersten Gruppe basierend auf einer Anzahl der Fahrzeugtrajektorien, die jeden der Schnittpunkte in der ersten Gruppe der mindestens einen Gruppe passieren.

10. Vorrichtung nach Anspruch 9, wobei der vorbestimmte Bereich durch das Bestimmungsmodul bestimmt wird und das Bestimmungsmodul konfiguriert ist zum:
Erfassen von Koordinaten einer Mehrzahl von Punkten auf der Grenze in einer ersten Richtung und Koordinaten der Mehrzahl von Punkten in einer zweiten Richtung, wobei die Mehrzahl von Punkten von der Grenze mit vorbestimmter Genauigkeit erhalten wird;
Vergleichen der Koordinaten der Mehrzahl von Punkten in der ersten Richtung, um Xₘₐₓ und Xₘᵢₙ zu erhalten, wobei Xₘₐₓ ein Maximalwert unter den Koordinaten der Mehrzahl von Punkten in der ersten Richtung ist und Xₘᵢₙ ein Minimalwert unter den Koordinaten der Mehrzahl von Punkten in der ersten Richtung ist;
Vergleichen der Koordinaten der Mehrzahl von Punkten in der zweiten Richtung, um Yₘₐₓ und Yₘᵢₙ zu erhalten, wobei Yₘₐₓ ein Maximalwert unter den Koordinaten der Mehrzahl von Punkten in der zweiten Richtung ist und Yₘᵢₙ ein Minimalwert unter den Koordinaten der Mehrzahl von Punkten in der zweiten Richtung ist; und
Bestimmen von Koordinaten von vier Eckpunkten des vorbestimmten Bereichs als (Xₘᵢₙ, Yₘₐₓ), (Xₘₐₓ, Yₘₐₓ), (Xₘₐₓ, Yₘᵢₙ) und (Xₘᵢₙ, Yₘᵢₙ).

11. Vorrichtung nach Anspruch 9 oder 10, wobei die Fahrzeugtrajektorien und das übereinstimmende Straßennetz eine Eins-zu-Eins-Entsprechung aufweisen.

12. Vorrichtung nach einem der Ansprüche 9 bis 11, wobei das Planungsmodul konfiguriert ist zum:
Zählen einer Anzahl der Fahrzeugtrajektorien, die jeden der Schnittpunkte in der ersten Gruppe innerhalb einer vorbestimmten Zeit passieren;
gemäß einer Bestimmung, dass die Anzahl der Fahrzeugtrajektorien größer als ein Anzahlschwellenwert ist, Bestimmen, dass Verkehrsprüfpunkte, die den Schnittpunkten in der ersten Gruppe entsprechen, Kandidaten-Verkehrsprüfpunkte des ersten Verkehrsprüfpunkts sind; und
Auswählen einer Position eines der Kandidaten-Verkehrsprüfpunkte, durch die die meisten Fahrzeugtrajektorien als die spezifische Position des ersten Verkehrsprüfpunkts laufen.

13. Vorrichtung nach einem der Ansprüche 9 bis 12, wobei der erste Verkehrsprüfpunkt eine Zollstation ist und die zwei benachbarten Bereiche zu unterschiedlichen Ländern oder Regionen gehören.

14. Computerprogrammprodukt, umfassend Programmcodeabschnitte zum Durchführen des Verfahrens nach einem der Ansprüche 1 bis 8, wenn das Computerprogrammprodukt auf einer oder mehreren Rechenvorrichtungen ausgeführt wird.

15. Computerlesbares Speichermedium mit darauf gespeicherten Computerprogrammanweisungen, wobei die Computerprogrammanweisungen, wenn sie von einem Prozessor ausgeführt werden, den Prozessor veranlassen, das Verfahren nach einem der Ansprüche 1 bis 8 durchzuführen.

## Revendications

1. Procédé mise en oeuvre par ordinateur permettant de déterminer un point de contrôle de trafic, le procédé consistant à:
acquérir (101) des données de trajectoires de véhicule à l'intérieur d'une zone prédéfinie, la zone prédéfinie étant déterminée par une frontière entre une première zone et une seconde zone adjacente à la première zone, dans lequel la frontière est une frontière de zone administrative entre la première zone et la seconde zone;
mettre en correspondance (102) les données des trajectoires de véhicule avec les données cartographiques à l'intérieur de la zone prédéfinie pour obtenir un réseau routier correspondant;
déterminer (103) une pluralité de points d'intersection entre le réseau routier et la frontière, et diviser la pluralité des points d'intersection en au moins un groupe, une distance entre deux quelconques points d'intersection dans un premier groupe de l'au moins un groupe étant inférieure à une valeur prédéfinie; et
déterminer (104) une position spécifique d'un premier point de contrôle de trafic dans le premier groupe sur la base d'un nombre de trajectoires de véhicule passant par chacun des points d'intersection dans le premier groupe de l'au moins un groupe.

2. Procédé selon la revendication 1, dans lequel la zone prédéfinie est déterminée par la réalisation des opérations consistant à:
acquérir les coordonnées d'une pluralité de points sur la frontière dans une première direction et les coordonnées de la pluralité de points dans une seconde direction, la pluralité de points étant obtenue à partir de la frontière avec une précision prédéfinie;
comparer les coordonnées de la pluralité de points dans la première direction pour obtenir Xₘₐₓ et Xₘᵢₙ, Xₘₐₓ est une valeur maximum parmi les coordonnées de la pluralité de points dans la première direction, et Xₘᵢₙ est une valeur minimum parmi les coordonnées de la pluralité de points dans la première direction;
comparer les coordonnées de la pluralité de points dans la seconde direction pour obtenir Yₘₐₓ et Yₘᵢₙ, , Yₘₐₓ est une valeur maximum parmi les coordonnées de la pluralité de points dans la seconde direction, et Yₘᵢₙ est une valeur minimum parmi les coordonnées de la pluralité de points dans la seconde direction; et
déterminer les coordonnées de quatre sommets dans la zone prédéfinie en tant que (Xₘᵢₙ, Yₘₐₓ), (Xₘₐₓ, Yₘₐₓ), (Xₘₐₓ, Yₘᵢₙ), et (Xₘᵢₙ, Yₘᵢₙ).

3. Procédé selon la revendication 2, dans lequel la mise en correspondance des données des trajectoires du véhicule avec les données cartographiques à l'intérieur de la zone prédéfinie pour obtenir un réseau routier correspondant consiste à:
déterminer si un degré de mise en correspondance entre les données des trajectoires de véhicule et les données d'un réseau routier existant dans les données cartographiques à l'intérieur de la zone prédéfinie dépasse un seuil de degré de mise en correspondance prédéfini; et
déterminer, en réponse à la détermination que le degré de mise en correspondance dépasse le seuil, un itinéraire actuel dans le réseau routier existant en tant qu'itinéraire dans le réseau routier correspondant.

4. Procédé selon la revendication 3, dans lequel chacune des trajectoires de véhicule correspond à un itinéraire respectif dans le réseau routier correspondant.

5. Procédé selon l'une quelconque des revendications précédentes, dans lequel la détermination d'une pluralité de points d'intersection entre le réseau routier et la frontière consiste à:
rechercher la pluralité de points d'intersection entre le réseau routier correspondant et la frontière, dans lequel le réseau routier correspondant comprend une pluralité d'itinéraires croisant la frontière pour former la pluralité de points d'intersection.

6. Procédé selon l'une quelconque des revendications précédentes, dans lequel la pluralité des points d'intersection est divisée en l'au moins un groupe au moyen d'un algorithme profondeur d'abord ou au moyen d'un algorithme largeur d'abord.

7. Procédé selon l'une quelconque des revendications précédentes, dans lequel la détermination d'une position spécifique d'un point de contrôle de trafic dans le premier groupe sur la base d'un nombre de trajectoires de véhicule passant par chacun des points d'intersection dans le premier groupe de l'au moins un groupe consiste à :
compter le nombre de trajectoires de véhicule passant par chacun des points d'intersection dans le premier groupe dans un temps prédéfini;
conformément à une détermination que le nombre de trajectoires de véhicule passant par chacun des points d'intersection dans le premier groupe est supérieur à un seuil de nombre, déterminer que des points de contrôle de trafic correspondant aux points d'intersection dans le premier groupe sont des points de contrôle de trafic candidats du premier point de contrôle de trafic; et
sélectionner une position de l'un des points de contrôle de trafic candidats par lequel passe la plupart des trajectoires de véhicule en tant que position spécifique du premier point de contrôle de trafic.

8. Procédé selon l'une quelconque des revendications précédentes, dans lequel le premier point de contrôle de trafic est un port de douane, et les deux zones adjacentes appartiennent à des régions ou pays différents.

9. Appareil permettant de déterminer un point de contrôle de trafic, l'appareil comprenant:
un module d'acquisition (510) conçu pour acquérir des données de trajectoires de véhicule à l'intérieur d'une zone prédéfinie, la zone prédéfinie étant déterminée par une frontière entre une première zone et une seconde zone adjacente à la première zone, dans lequel la frontière est une frontière de zone administrative entre la première zone et la seconde zone;
un module de mise en correspondance (520) conçu pour mettre en correspondance les données des trajectoires de véhicule avec les données cartographiques à l'intérieur de la zone prédéfinie pour obtenir un réseau routier correspondant;
un module de détermination (530) conçu pour déterminer une pluralité de points d'intersection entre le réseau routier et la frontière, et diviser la pluralité des points d'intersection en au moins un groupe, une distance entre deux quelconques points d'intersection dans un premier groupe de l'au moins un groupe étant inférieure à une valeur prédéfinie; et
un module de planification (540) conçu pour déterminer une position spécifique d'un premier point de contrôle de trafic dans le premier groupe sur la base d'un nombre de trajectoires de véhicule passant par chacun des points d'intersection dans le premier groupe de l'au moins un groupe.

10. Appareil selon la revendication 9, dans lequel la zone prédéfinie est déterminée par le module de détermination, et le module de détermination est conçu pour:
acquérir les coordonnées d'une pluralité de points sur la frontière dans une première direction et les coordonnées de la pluralité de points dans une seconde direction, la pluralité de points étant obtenue à partir de la frontière avec une précision prédéfinie;
comparer les coordonnées de la pluralité de points dans la première direction pour obtenir Xₘₐₓ et Xₘᵢₙ, Xₘₐₓ est une valeur maximum parmi les coordonnées de la pluralité de points dans la première direction Xₘᵢₙ est une valeur minimum parmi les coordonnées de la pluralité de points dans la première direction;
comparer les coordonnées de la pluralité de points dans la seconde direction pour obtenir Yₘₐₓ et Yₘᵢₙ, , Yₘₐₓ est une valeur maximum parmi les coordonnées de la pluralité de points dans la seconde direction, et Yₘᵢₙ est une valeur minimum parmi les coordonnées de la pluralité de points dans la seconde direction; et
déterminer les coordonnées de quatre sommets dans la zone prédéfinie en tant que (Xₘᵢₙ, Yₘₐₓ), (Xₘₐₓ, Yₘₐₓ), (Xₘₐₓ, Yₘᵢₙ), and (Xₘᵢₙ, Yₘᵢₙ).

11. Appareil selon la revendication 9 ou 10, dans lequel les trajectoires de véhicule et le réseau routier correspondant ont une correspondance un pour un.

12. Appareil selon l'une quelconque des revendications 9 à 11, dans lequel le module de planification est conçu pour:
compter un nombre de trajectoires de véhicule passant par chacun des points d'intersection dans le premier groupe dans un temps prédéfini;
conformément à une détermination que le nombre de trajectoires de véhicule est supérieur à un seuil de nombre, déterminer que les points de contrôle de trafic correspondant aux points d'intersection dans le premier groupe sont des points de contrôle de trafic candidats du premier point de contrôle de trafic; et
sélectionner une position de l'un des points de contrôle de trafic candidats par lequel passe la plupart des trajectoires de véhicule en tant que position spécifique du premier point de contrôle de trafic.

13. Procédé selon l'une quelconque des revendications 9 à 12, dans lequel le premier point de contrôle de trafic est un port de douane, et les deux zones adjacentes appartiennent à des régions ou pays différents.

14. Produit programme d'ordinateur comprenant des parties de code de programme permettant d'exécuter le procédé selon l'une quelconque des revendications 1 et 8 lorsque le produit programme d'ordinateur est exécuté sur un ou plusieurs dispositifs informatiques.

15. Support de stockage lisible par ordinateur sur lequel sont stockées des instructions de programme informatique, dans lequel les instructions de programme informatique, lorsqu'elles sont exécutées par un processeur, amènent le processeur à exécuter le procédé selon l'une quelconque des revendications 1 à 8.
